# EUROPÄISCHE PATENTSCHRIFT

(11) **EP 2 905 799 B1**
(45) Veröffentlichungstag und Bekanntmachung des Hinweises auf die Patenterteilung: **06.02.2019**
(21) Anmeldenummer: 14197107.7
(22) Anmeldetag: 10.12.2014
(51) Int. Cl.: H01H 71/02, F16B 21/02, H02B 1/04

(54) **Anordnung aus einem Basisgerät und einem Anbaugerät**
Assembly of a base device and an attachment
Système constitué d'un appareil de base et d'un élément auxiliaire

(30) Priorität: 06.02.2014 DE 102014001500
(43) Veröffentlichungstag der Anmeldung: 12.08.2015
(73) Patentinhaber: ABB AG, 68309 Mannheim (DE)
(72) Erfinder: Majewski, Joachim, 69221 Dossenheim (DE); Muders, Erwin, 69126 Heidelberg (DE); Pump, Wolfgang, 09427 Ehrenfriedersdorf (DE)

(56) Entgegenhaltungen:
- DE-A1- 4 420 766
- DE-A1- 19 530 034
- DE-A1- 19 919 541
- DE-A1-102004 042 426

## Beschreibung

Die Erfindung betrifft eine Anordnung aus einem Basisgerät und einem Anbaugerät, die an jeweils einer ihrer Gehäuseseiten aneinandergereiht sind, und aus einem Verbindungsmittel zur mechanischen Verbindung des Anbaugerätes mit dem Basisgerät.

Insbesondere handelt es sich bei dem Basisgerät um ein Installationsschaltgerät, zum Beispiel einen Leitungsschutzschalter, einen selektiven Leitungsschutzschalter oder einen Fehlerstromschutzschalter. Bei dem Anbaugerät handelt es sich insbesondere um einen Hilfsschalter, der seitlich an der Breitseite eines Leitungsschutzschalters angereiht und mechanisch lösbar mit dem Leitungsschutzschalter verbunden wird. Der Hilfsschalter dient beispielsweise dazu, den Schaltzustand des Leitungsschutzschalters mittels eines elektrischen Signales an eine übergeordnete Steuerung oder Überwachungseinheit zu melden.

Es ist bekannt, Verbundeinheiten aus einem Leitungsschutzschalter und einem Hilfsschalter dadurch zu schaffen, dass zwischen den Breitseiten der aneinander zu reihenden Geräte Verbindungsstifte eingesetzt werden, die mit Rastmitteln versehen sind und die beim Aneinanderreihen mit komplementär dazu ausgebildeten Raststrukturen an den Gehäusebreitseiten verrasten. Die Verbindungsstelle ist jedoch nach erfolgter Verrastung von außen nicht mehr zugänglich, da sie zwischen den beiden aneinandergereihten Breitseiten verborgen ist. Folglich können solcherart verbundene Geräte auch nicht mehr zerstörungsfrei voneinander gelöst werden, denn wenn man den auf solche Art hergestellten Verbund von Basisgerät und Anbaugerät wieder lösen will, muss man eine gewisse Gewalt anwenden und wird den Verbindungsstift aus der komplementären Raststruktur in der Gehäuseseite herausreißen, wobei sowohl der Verbindungsstift als auch die Gehäusewand oft beschädigt werden. Solche Verbundgeräte aus Leitungsschutzschalter und Hilfsschalter werden daher in der Fertigung beim Hersteller bereits als Kombinationsgeräte vorkonfektioniert. Sie können beim Kunden nur als vorgefertigte Gerätekombination eingesetzt werden. Ein Anpassen oder Verändern der Anzahl und Art der aneinandergereihten Geräte durch den Kunden selbst ist nicht möglich.

Andere bekannte Möglichkeiten, um eine zerstörungsfrei lösbare Verbindung von Leitungsschutzschalter und Hilfsschalter herzustellen, sind lineare Schieber oder kippbare Klammern, die von außen über die aneinandergefügten Gehäuse geschoben werden. Hierzu sind allerdings zusätzlich Teile nötig. Außerdem vergrößern die von außen angebrachten Klammern die Umfangskontur der Gerätekombination, was bei dem beschränkten Platzangebot in Verteilungskästen oder -schränken, in denen die Gerätekombinationen meistens eingebaut sind, von Nachteil ist.

Die DE 10 2004 042 426 A1 zeigt ein Verbindungselement zur Verbindung zweier mit ihrer Breitseite nebeneinander angeordneter Installationsgeräte, insbesondere Leitungsschutzschalter, Fehlerstromschutzschalter und dergleichen, beispielsweise zur Verbindung eines Hilfsschalters an einem Leitungsschutzschalter. Das Verbindungselement weist einen Grundkörperabschnitt auf, an dessen einem Ende zwei federnde Arme parallel zueinander vorspringen, an deren freien Enden auf sich diametral gegenüberliegenden Mantellinien radial nach außen vorspringende Nasen angeformt sind und an dessen den Armen entgegengesetztem Ende eine umlaufende, als Kopf dienende Leiste angeordnet ist. An den Innenseiten der Arme im Bereich der Nasen sind Mittel angeordnet, die zur Begrenzung des Zusammendrückens der Arme beim Verrastungsvorgang dienen.

Die DE 195 30 034 A1 zeigt eine Verriegelungsvorrichtung zwischen einem Deckel und einem Sockel mit einem Zapfen, dessen Kopf in dem Deckel zwischen einer Lösestellung und einer Verriegelungsstellung drehbar geführt ist und der mit widerhakenartigen Stegen in Verriegelungsprofile des Sockels eingreift. Der Kopf ist an Abreißlaschen gehalten und wirkt bei der Drehbewegung mit Ringstufen zusammen. Radiale Rippen des Zapfens wirken beim Eindrücken der Verriegelungsvorrichtung mit Ringkeilprofilen des Sockels zusammen, die den Zapfen in Verriegelungsstellung drehen.

Die DE 199 19 541 A1 zeigt eine Verbindungsvorrichtung zur Verbindung einer Anzahl von Bauelementen, insbesondere zur Verbindung der Gehäuseteile von Leitungsschutzschaltern, mit einem Verbindungselement, das einen in der Verbindung der Bauelemente miteinander fluchtende Durchgangsöffnungen durchsetzenden Schaft mit einem Einführende und mit einem diesen gegenüberliegenden Halteende aufweist. Um beim Verdrehen des Verbindungselements zum Verspannen der Bauelemente einerseits eine Zentrierung und andererseits einen möglichst geringen Verdreh- oder Verdrillweg zu erzielen, ist eine das Halteende aufnehmende und mit den Durchgangsöffnungen fluchtende erste Montagevertiefung als Zentrierkegel ausgebildet, wobei das Halteende unter Bildung einer mit dem Zentrierkegel korrespondierenden Anzugsfläche konisch ausgebildet ist.

Es ist daher die der vorliegenden Erfindung zugrunde liegende Aufgabe, eine Anordnung aus einem Basisgerät und einem Anbaugerät, insbesondere zwischen einem Leitungsschutzschalter und einem Hilfsschalter, zu schaffen, bei der die beiden aneinanderzureihenden Geräte leicht verbunden und auch leicht und zerstörungsfrei wieder voneinander gelöst werden können, ohne dass zusätzlich Raum im Verteilerkasten beansprucht wird.

Die der Erfindung zugrunde liegende Aufgabe wird gelöst durch eine Anordnung nach Anspruch 1.

Erfindungsgemäß ist das Verbindungsmittel ein längserstreckter, in dem Basisgerät mit einem ersten Teilabschnitt drehbar gelagerter und mit einem an dem Verbindungsmittel ausgebildeten zweiten Teilabschnitt die Gehäuseseite des Basisgerätes überragender Körper, der eine Montageposition und eine Verriegelungsposition einnehmen kann und zwischen der Montageposition und der Verriegelungsposition verschwenkbar ist, wobei an dem zweiten Teilabschnitt des Verbindungsmittels und der Gehäuseseite des Anbaugerätes räumlich zueinander passende, komplementäre Haltestrukturen ausgebildet sind, die zum Ineinandergreifen in der Montageposition und zum lösbaren Aneinanderhalten in der Verriegelungsposition ausgebildet sind, wobei an dem ersten Teilabschnitt des Verbindungsmittels und dem Basisgerät räumlich zueinander passende, komplementäre Feststellmittel ausgebildet sind, die das Verbindungsmittel in der Montageposition und in der Verriegelungsposition unter Ausbildung einer zum Verschwenken des Verbindungsmittels überwindbaren Haltekraft arretieren.

Bei der erfindungsgemäßen Anordnung ist in der Montageposition also das Verbindungsmittel leicht arretiert in einer Stellung, in der es in die komplementäre Haltestruktur in der Gehäusebreitseite des Anbaugerätes eingeführt werden kann. Die leichte Arretierung sorgt dafür, dass das Verbindungsmittel nicht unbeabsichtigt in die Verriegelungsposition sich verschwenkt, so lange noch kein Anbaugerät angereiht wurde. Herstellerseitig kann beispielsweise das Verbindungsmittel in die Montageposition gebracht worden sein, und die Arretierung sorgt dafür, dass es auch während des Verpackungs-, Auslieferung- und Auspackprozesses darin bleibt und vor Ort beim Kunden dieser ohne eine weitere Prüfung sofort und schnell das Anbaugerät ansetzen kann und das Verbindungsmittel dabei sicher in die komplementäre Haltestruktur an der Gehäusewand des Anbaugerätes sich einfügt. Wenn die beiden Geräte aneinander gefügt sind, wird das Verbindungsmittel verschwenkt, es kommt dadurch in die Verriegelungsposition, und dadurch ist eine feste, aber dennoch lösbare Verbindung zwischen dem Basisgerät und dem Anbaugerät hergestellt. In der Verriegelungsposition ist das Verbindungsmittel auch wieder arretiert. Dadurch ist ein versehentliches Rück-Schwenken in die Montageposition und ein nicht beabsichtigtes Auseinanderfallen von Basisgerät und Anbaugerät verhindert. Zum Lösen der Verbindung wird das Verbindungsmittel von außen gegen die Arretierungskraft in die Montageposition zurück verschwenkt. Jetzt kann beim Auseinandernehmen von Basisgerät und Anbaugerät das Verbindungsmittel aus der Haltestruktur zerstörungsfrei herausgleiten.

Gemäß einer vorteilhaften Ausführungsform der Erfindung ist die Haltestruktur an dem zweiten Teilabschnitt des Verbindungsmittels ein radial von der Schwenkachse abstehender Zapfen und die dazu komplementäre Haltestruktur an der Gehäuseseite des Anbaugerätes eine Öffnung in der Gehäuseseite. Die Öffnung hat eine ovale oder ellipsenartige Kontur. Die ovale Kontur ist so positioniert und dimensioniert, dass der Zapfen des Verbindungsmittels in der Montageposition durch die ovale Kontur hindurchpasst, nach einer 90°-Drehung aus der Montageposition heraus aber nicht mehr durch die Kontur hindurchpasst. Nach Verdrehen in die Verriegelungsposition steht der Zapfen dann quer zur Längserstreckung der ovalen Kontur und hintergreift die Gehäusewand. Dadurch kann in der Verriegelungsposition der Zapfen und damit das Verriegelungselement nicht mehr aus der Öffnung herausgenommen werden, das Basisgerät und das Anbaugerät sind fest miteinander verbunden. Erst wenn das Verriegelungselement wieder in die Montageposition zurück gedreht wurde, passt der Zapfen wieder durch die ovale Öffnung und die beiden Geräte können voneinander gelöst werden. Das Verbindungsmittel und die Haltestruktur wirken zusammen wie ein Schlüssel mit einem Schloss, man kann auch vom Schlüssel-Schloss-Prinzip sprechen.

Gemäß einer vorteilhaften Ausführungsform der Erfindung ist das Feststellmittel an dem ersten Teilabschnitt des Verbindungsmittels eine in radialer Richtung von der Schwenkachse beabstandete Nase mit einer konkav gekrümmten Wirkfläche, und das dazu komplementäre Feststellmittel an dem Basisgerät ist eine Struktur mit zwei gerundeten Vorsprüngen, wobei in der Montageposition und in der Verriegelungsposition jeweils einer der gerundeten Vorsprünge in die konkav gekrümmte Wirkfläche eingreift zur Ausbildung der zum Verschwenken des Verbindungsmittels überwindbaren Haltekraft.

Gemäß einer vorteilhaften Ausführungsform der Erfindung ist die Haltekraft in der Verriegelungsposition größer als die Haltekraft in der Montageposition.

Gemäß einer vorteilhaften Ausführungsform der Erfindung ist der erste Teilabschnitt des Verbindungsmittels mit einem Betätigungsmittel ausgebildet, das von der Außenseite des Basisgerätes her für ein Werkzeug zugänglich ist, um das Verbindungsmittel verschwenken zu können.

Gemäß einer vorteilhaften Ausführungsform der Erfindung ist das Betätigungsmittel ein Schlitz zur Aufnahme des freien Endes eines Schraubendrehers.

Gemäß einer vorteilhaften Ausführungsform der Erfindung ist der längserstreckte Körper aus einer Welle gebildet, an deren den ersten Teilabschnitt bildenden Teilstück eine die Nase tragende Anformung ausgebildet ist, und an dessen den zweiten Teilabschnitt bildenden Teilstück der Zapfen ausgebildet ist.

Gemäß einer vorteilhaften Ausführungsform der Erfindung ist in jeder der beiden sich gegenüberliegenden Gehäusebreitseiten des Basisgerätes eine zu der Welle komplementär ausgebildete Ausnehmung vorhanden, und der erste Teilabschnitt ist in den beiden Ausnehmungen schwenkbar gelagert.

Anhand der Zeichnungen soll die Erfindung sowie weitere vorteilhafte Ausgestaltungen und Verbesserungen der Erfindung näher erläutert und beschrieben werden. Es zeigen
- Fig. 1a - c: ein erfindungsgemäßes Verbindungmittel in drei verschiedenen perspektivischen Ansichten,
- Fig. 2 a - b: schematisch einen Zwischenschritt bei der Montage des Verbindungsmittels in das Basisgerät, in zwei verschiedenen perspektivischen Ansichten,
- Fig. 2c - d: schematisch das in das Basisgerät eingebaute Verbindungsmittel, in zwei verschiedenen perspektivischen Ansichten,
- Fig. 3a - b: schematisch das Basisgerät und das Anbaugerät, in Vorbereitung des Aneinanderfügens, in zwei verschiedenen perspektivischen Ansichten,
- Fig. 3c - d: schematisch das an das Basisgerät angereihte Anbaugerät, wobei das Verbindungsmittel noch in der Montageposition ist,
- Fig. 4a - 4b: schematisch das an das Basisgerät angereihte Anbaugerät, wobei das Verbindungsmittel in der Verriegelungsposition ist,
- Fig. 5a: schematisch das komplementäre Feststellmittel an dem Basisgerät,
- Fig. 5b - c: schematisch den Eingriff der gekrümmten Wirkfläche an dem Verbindungsmittel mit dem komplementären Feststellmittel, in der Verriegelungsposition des Verbindungsmittels.

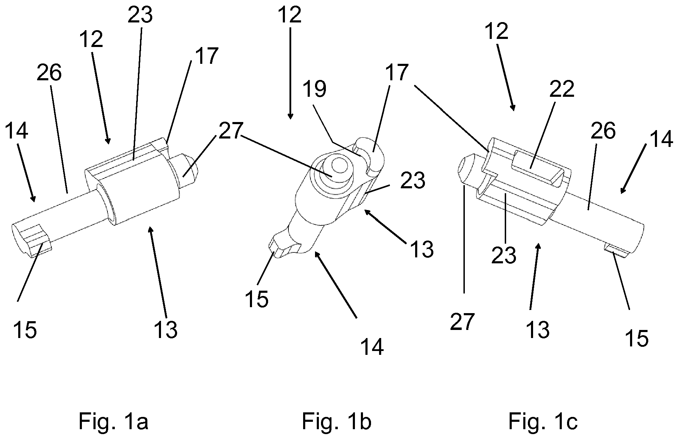

Figur 1 zeigt ein erfindungsgemäßes Verbindungmittel 12 in drei verschiedenen perspektivischen Ansichten. Das Verbindungsmittel 12 ist ein längserstreckter Körper. Diese ist aus einer Welle 26 gebildet. Die Längsmittelachse der Welle 26 ist die Schwenkachse der Welle 26 und damit die Schwenkachse des Verbindungsmittels 12.

Die Welle 26 und damit das Verbindungsmittel 12 hat zwei Teilabschnitte 13, 14. An dem ersten Teilabschnitt 13 befindet sich eine verdickte Anformung 23. Diese endet ein Stück von dem freien Ende des ersten Teilabschnitts 13 entfernt, so dass an dem freien Ende des ersten Teilabschnitts 13 ein Lagerende 27 der Welle frei bleibt. Der mittlere Teil des zweiten Teilabschnitts 14 ist als Abschnitt der Welle 26 ausgebildet. Das Lagerende 27 und der mittlere Teil des zweiten Teilabschnitts 14 dienen als Führungsachsen zur Lagerung des Verbindungsmittels 12 in Gehäuseteilen des Gehäuses des Basisgerätes.

Am freien Ende des zweiten Teilabschnitts 14 ist ein radial von der Welle 26 abstehender Zapfen 15 angeformt. Dieser dient als Verriegelungszapfen, er stellt die Haltestruktur an dem zweiten Teilabschnitt 14 des Verbindungsmittels 12 dar.

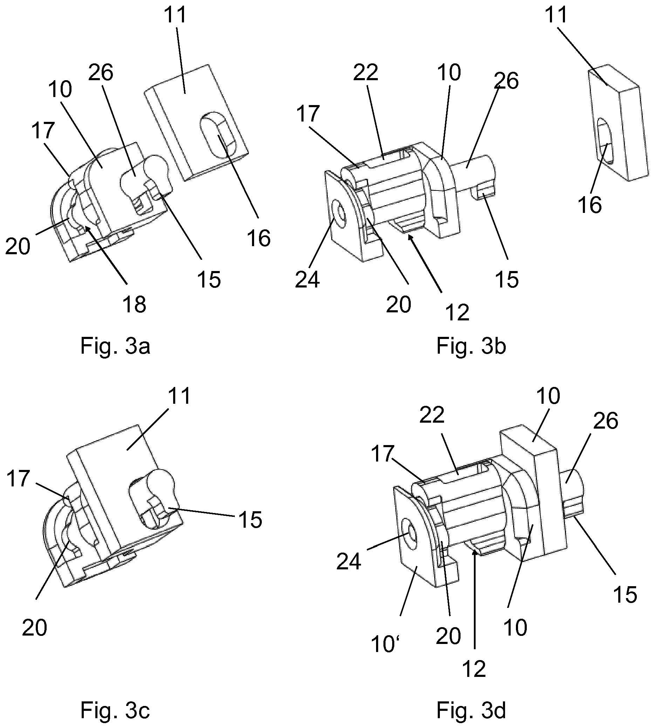

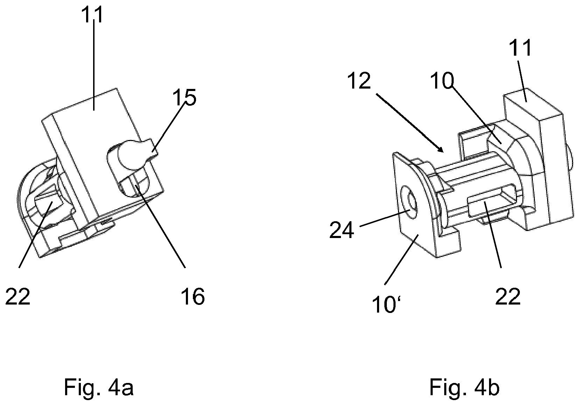

An der verdickten Anformung 23 ist außen eine in radialer Richtung von der Schwenkachse abstehende und damit auch von der Schwenkachse beabstandete und radial von der Anformung 23 abstehende Nase 17 mit einer konkav gekrümmten Wirkfläche 17 angeformt. Die Nase 17 dient als Fixiernase. Sie hat eine Arretierungsfunktion zum arretierenden Halten des Verbindungsmittels 12 in der Montage- und in der Verriegelungsposition, siehe Figuren 3a - d und Figuren 4a - b.

Von der Oberfläche der Anformung 23 aus radial in Richtung auf die Schwenkachse zu ist in der Anformung 23 ein Schlitz 22 eingebracht. Dieser kann auch als Nut bezeichnet werden. Er dient zur Aufnahme eines Werkzeugs, mit dessen Hilfe das Verbindungsmittel um seine Schwenkachse verschwenkt werden kann, wenn es in das Basisgerät eingebaut ist.

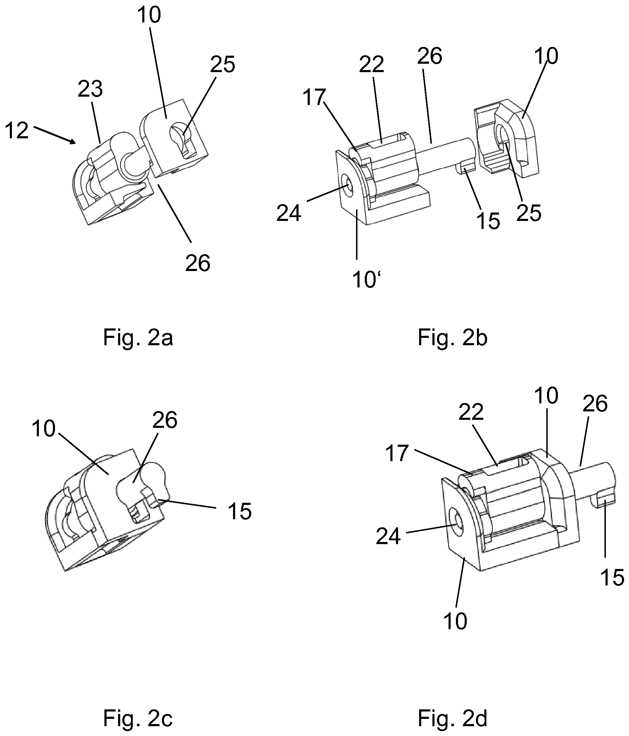

Die Figuren 2a - d zeigen, wie das Verbindungsmittel 12 in das Gehäuse des Basisgerätes eingesetzt wird. Es ist im eingebauten Zustand zwischen zwei parallelen Breitseiten 10. 10' des Basisgerätes verschwenkbar gehalten. Von den Breitseiten 10, 10' sind in den Figuren nur kleine Teilabschnitte in der unmittelbaren Nähe des Verbindungsmittels 12 gezeigt. Das Verbindungsmittel 12 ist mit dem Lagerende 27 in einem Loch 24 in der einen Gehäusebreitseite 10' gelagert, und mit dem mittleren Teil des zweiten Teilabschnitts 14 ist es in einem Loch 25 in der zweiten Gehäusebreitseite 10 verschwenkbar gelagert. Das freie Ende des zweiten Teilabschnitts 14 mit dem Zapfen 15 ragt ein gutes Stück weit über die zweite Gehäusebreitseite 10 hinaus. Diese zweite Gehäusebreitseite 10 ist es, an der später das Anbaugerät angereiht wird.

Die Figuren 2a und 2b zeigen einen Zwischenschritt bei der Montage des Verbindungsmittels 12 in das Basisgerät. Das Verbindungsmittel ist mit seinem Lagerende 27 schon in dem Loch 24 in der einen Gehäusebreitseite 10' gelagert. Die zweite Gehäusebreitseite 10 ist noch nicht aufgesetzt. Sie hat eine Ausnehmung 25 in der Form etwa eines Schlüsselloches, durch die hindurch der Zapfen 15 beim Zusammenfügen der Gehäuseteile 10', 10 gesteckt werden kann.

Die Ausnehmungen 24, 25 befinden sich in der Nähe einer Kante an der frei zugänglichen Oberfläche des Basisgerätes. Sie sind so positioniert, dass nach der Montage des Verbindungsmittels 12 die Oberseite der Anformung 23 mit dem Schlitz 22 in etwa bündig mit der zugänglichen Oberfläche des Basisgerätes abschließt. Dadurch ist erreicht, dass das Verbindungsmittel jederzeit von außerhalb durch ein Werkzeug, etwa einen Schraubendreher, dessen Ende in des Schlitz 22 eingeführt wird, betätigt werden kann, auch wenn bereits ein Anbaugerät angereiht und befestigt ist. Somit ist gewährleistet, dass die Kombination aus Basisgerät und Anbaugerät jederzeit von dem Kunden vor Ort mit Hilfe eines Werkzeugs zerstörungsfrei wieder auseinander gebaut werden kann.

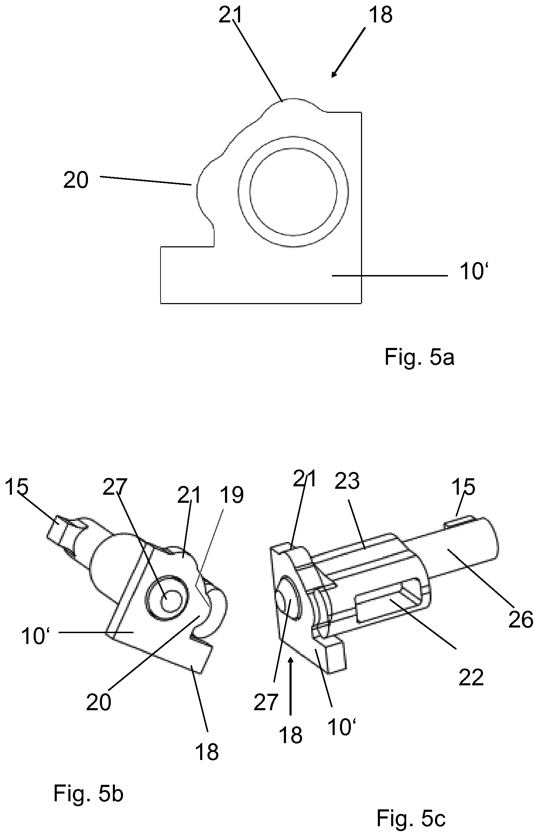

Die Figuren 5a - c zeigen die Arretierungsfunktion für das Verbindungsmittel 12 durch an dem ersten Teilabschnitt 13 des Verbindungsmittels 12 und dem Basisgerät räumlich zueinander passend ausgebildete komplementäre Feststellmittel 17, 18. An der ersten Gehäusebreitseite 10' ist dazu eine Struktur 18 mit zwei gerundeten Vorsprüngen 20, 21 ausgebildet. Die Struktur 18 hat als zwei Nocken, die um etwa 90° zueinander versetzt sind. Die Oberflächenkrümmung der Nocken 20, 21 ist der konkaven Krümmung der Wirkfläche 19 an der Nase 17 an der Anformung 23 angepasst, so dass beide formschlüssig ineinander greifen können, und dadurch kann das Verbindungsmittel 12 in zwei um 90° zueinander versetzten Drehstellungen arretiert werden. Die Fixiernase 17 des Verbindungsmittels 12 wird also formschlüssig durch je einen der Gehäusenocken 20, 21 in der durch den jeweiligen Nocken 20, 21 festgelegten Fixier-Position gehalten. Durch die Höhe des Nockens kann dabei die Fixierkraft, also die Haltekraft, gesteuert werden. Wenn der Nocken höher ist, ist eine größere Haltekraft zu überwinden, um das Verbindungsteil aus der Fixier-Position wegzudrehen.

In Figur 5a sieht man, dass der Nocken 21 niedriger ist als der Nocken 20. In Figur 5b ist das verbindungsteil 12 in der Verriegelungsposition dargestellt. Das sieht man durch Vergleich der Lage des Verbindungsmittels 12 in Figur 5b und den Figuren 3a - d 8diese zeigen die Montageposition) und den Figuren 4a - b (diese zeigen die Verriegelungsposition). In der Verriegelungsposition des Verbindungsmittels 12 ist die Fixiernase 17 durch den höheren Nocken 20 gehalten. Also ist eine größere Kraft zu überwinden, um das Verbindungsmittel 12 aus der Verriegelungsposition in die Montagestellung zu drehen, als umgekehrt. Das hat den Vorteil, dass das Verbindungsmittel 12 in der Verriegelungsposition, wenn das Anbaugerät nämlich an das Basisgerät angebaut und festgehalten ist, besonders gut gegen ein unbeabsichtigtes Verdrehen zurück in die Montageposition gesichert ist.

In der Montageposition des Verbindungsmittels 12 dagegen ist die Fixiernase 17 durch den niedrigeren Nocken 21 gehalten. Also ist eine geringere Kraft erforderlich, um beim Anbau des Anbaugerätes das Verbindungsmittel aus der Montageposition in die Verriegelungsposition zu verdrehen. Das ist von Vorteil für eine leichte Montage des Anbaugerätes an das Basisgerät. Das Verbindungsmittel 12 ist zwar arretiert, um es in der Montageposition auch gegen unbeabsichtigtes Verdrehen zu schützen, doch es kann mit geringem Kraftaufwand in die Verriegelungsposition verbracht werden.

Die Figuren 3a - b zeigen das Basisgerät und das Anbaugerät, in Vorbereitung des Aneinanderfügens. Das Verbindungsmittel 12 ist in der Montageposition. Der Zapfen 15 ist dabei parallel zu der Längserstreckung der ovalen Öffnung 16 in der Breitseite 11 des Anbaugerätegehäuses ausgerichtet. In den Figuren 3c - d ist das Anbaugerät an das Basisgerät angereiht. Der Zapfen 15 ist durch die ovale Öffnung 16 hindurch in das Anbaugerät hinein hinter die Breitseite 11 des Anbaugerätegehäuses geglitten.

Die Figur 4a - b zeigt die Verriegelung des Anbaugerätes an dem Basisgerät. Das Verbindungsmittel 12 ist um 90° gegenüber der Montageposition verdreht worden. Dadurch hintergreift der Zapfen 15 die Breitseite 11 des Anbaugerätegehäuses. Somit ist ein Auseinanderziehen von Basisgerät und Anbaugerät nicht mehr ohne weiteres möglich, durch den Zapfen 15 sind das Anbaugerät und das Basisgerät fest aneinander gekoppelt, und die feste Kopplung kann jederzeit durch Zurückdrehen des Verbindungsmittels 12 rückgängig gemacht werden.

### Bezugszeichenliste

- 10: Gehäusebreitseite Basisgerät
- 10': Gehäusebreitseite Basisgerät
- 11: Gehäusebreitseite Anbaugerät
- 12: Verbindungsmittel
- 13: erster Teilabschnitt des Verbindungsmittels
- 14: zweiter Teilabschnitt des Verbindungsmittels
- 15: Zapfen
- 16: Öffnung
- 17: Nase mit konkav gekrümmter Wirkfläche
- 18: Struktur mit zwei gerundeten Vorsprüngen
- 19: konkav gekrümmte Wirkfläche
- 20: gerundeter Vorsprung
- 21: gerundeter Vorsprung
- 22: Betätigungsmittel, Schlitz
- 23: Anformung
- 24: Ausnehmung in Gehäusebreitseite 10'
- 25: Ausnehmung in Gehäusebreitseite 10
- 26: Welle
- 27: Lagerende

## Patentansprüche

1. Anordnung aus einem Basisgerät und einem Anbaugerät, die an jeweils einer ihrer Gehäuseseiten (10, 10') aneinandergereiht sind, und aus einem Verbindungsmittel (12) zur mechanischen Verbindung des Anbaugerätes mit dem Basisgerät, wobei das Verbindungsmittel (12) ein längserstreckter, in dem Basisgerät mit einem ersten Teilabschnitt (13) drehbar gelagerter und mit einem an dem Verbindungsmittel (12) ausgebildeten zweiten Teilabschnitt (14) die Gehäuseseite (10) des Basisgerätes überragender Körper ist, der eine Montageposition und eine Verriegelungsposition einnehmen kann und zwischen der Montageposition und der Verriegelungsposition verschwenkbar ist, wobei an dem zweiten Teilabschnitt (14) des Verbindungsmittels (12) und der Gehäuseseite (11) des Anbaugerätes räumlich zueinander passende, komplementäre Haltestrukturen (15, 16) ausgebildet sind, die zum Ineinandergreifen in der Montageposition und zum lösbaren Aneinanderhalten in der Verriegelungsposition ausgebildet sind, **dadurch gekennzeichnet, dass** an dem ersten Teilabschnitt (13) des Verbindungsmittels (12) und dem Basisgerät räumlich zueinander passende, komplementäre Feststellmittel (17, 18) ausgebildet sind, die das Verbindungsmittel (12) in der Montageposition und in der Verriegelungsposition unter Ausbildung jeweils einer zum Verschwenken des Verbindungsmittels (12) überwindbaren Haltekraft arretieren.

2. Anordnung nach Anspruch 1, wobei das Basisgerät ein Leitungsschutzschalter und das Anbaugerät ein Hilfsschalter ist.

3. Anordnung nach Anspruch 1, wobei die Haltestruktur an dem zweiten Teilabschnitt (14) des Verbindungsmittels (12) ein radial von der Schwenkachse abstehender Zapfen (15) und die dazu komplementäre Haltestruktur an der Gehäuseseite (11) des Anbaugerätes eine Öffnung (16) in der Gehäuseseite (11) ist.

4. Anordnung nach Anspruch 1, wobei das Feststellmittel an dem ersten Teilabschnitt (13) des Verbindungsmittels (12) eine in radialer Richtung von der Schwenkachse beabstandete Nase (17) mit einer konkav gekrümmten Wirkfläche (19) ist, und wobei das dazu komplementäre Feststellmittel an dem Basisgerät eine Struktur (18) mit zwei gerundeten Vorsprüngen (20, 21) ist, wobei in der Montageposition und in der Verriegelungsposition jeweils einer der gerundeten Vorsprünge (20, 21) in die konkav gekrümmte Wirkfläche (19) eingreift zur Ausbildung der zum Verschwenken des Verbindungsmittels (12) überwindbaren Haltekraft.

5. Anordnung nach Anspruch 1, wobei die räumlich zueinander passenden, komplementäre Feststellmittel (17, 18) so ausgebildet sind, dass die zum Verschwenken des Verbindungsmittels (12) zu überwindende Haltekraft in der Verriegelungsposition größer ist als in der Montageposition.

6. Anordnung nach Anspruch 1, wobei der erste Teilabschnitt (13) des Verbindungsmittels (12) mit einem Betätigungsmittel (22) ausgebildet ist, das von der Außenseite des Basisgerätes her für ein Werkzeug zugänglich ist, um das Verbindungsmittel (12) verschwenken zu können.

7. Anordnung nach Anspruch 6, wobei das Betätigungsmittel ein Schlitz (22) zur Aufnahme des freien Endes eines Schraubendrehers ist.

8. Anordnung nach Anspruch 1, wobei der längserstreckte Körper aus einer Welle (26) gebildet ist, an deren den ersten Teilabschnitt (13) bildenden Teilstück eine die Nase (17) tragende Anformung (23) ausgebildet ist, und an dessen den zweiten Teilabschnitt (14) bildendem Teilstück der Zapfen (15) ausgebildet ist.

9. Anordnung nach Anspruch 8, wobei der erste Teilabschnitt (13) in zwei, jeweils in einer der beiden sich gegenüberliegenden Gehäusebreitseiten (10, 10') des Basisgerätes und jeweils zu der Welle komplementär ausgebildeten, Ausnehmungen (24, 25) schwenkbar gelagert ist.

10. Anordnung nach Anspruch 4, wobei die beiden gerundeten Vorsprünge um 90° gegeneinander versetzt sind.

## Claims

1. Arrangement comprising a base device and an add-on device, which are lined up with one another on in each case one of their housing sides (10, 10'), and comprising a connecting means (12) for mechanically connecting the add-on device to the base device, wherein the connecting means (12) is an elongate body which is rotatably mounted in the base unit by way of a first sub-section (13) and protrudes beyond the housing side (10) of the base device by way of a second sub-section (14) which is formed on the connecting means (12), which body can assume a mounting position and a locking position and can be pivoted between the mounting position and the locking position, wherein complementary holding structures (15, 16) which spatially match one another are formed on the second sub-section (14) of the connecting means (12) and the housing side (11) of the add-on device, which holding structures are designed to interengage in the mounting position and to be releasably held against one another in the locking position, **characterized in that** complementary securing means (17, 18) which spatially match one another are formed on the first sub-section (13) of the connecting means (12) and the base device, which securing means lock the connecting means (12) in the mounting position and in the locking position so as to form in each case a holding force which can be overcome for pivoting the connecting means (12).

2. Arrangement according to Claim 1, wherein the base device is a line circuit breaker and the add-on device is an auxiliary switch.

3. Arrangement according to Claim 1, wherein the holding structure on the second sub-section (14) of the connecting means (12) is a pin (15) which projects radially from the pivot axis and the complementary holding structure on the housing side (11) of the add-on device is an opening (16) in the housing side (11).

4. Arrangement according to Claim 1, wherein the securing means on the first sub-section (13) of the connecting means (12) is a lug (17) which is at a distance from the pivot axis in the radial direction and has a concavely curved active surface (19), and wherein the complementary securing means on the base device is a structure (18) with two rounded projections (20, 21), wherein, in the mounting position and in the locking position, in each case one of the rounded projections (20, 21) engages into the concavely curved active surface (19) for the purpose of forming the holding force which can be overcome for pivoting of the connecting means (12).

5. Arrangement according to Claim 1, wherein the complementary securing means (17, 18) which spatially match one another are formed such that the holding force which has to be overcome for pivoting the connecting means (12) is greater in the locking position than in the mounting position.

6. Arrangement according to Claim 1, wherein the first sub-section (13) of the connecting means (12) is formed with an operating means (22) which is accessible to a tool from the outside of the base device in order to be able to pivot the connecting means (12).

7. Arrangement according to Claim 6, wherein the operating means is a slot (22) for receiving the free end of a screwdriver.

8. Arrangement according to Claim 1, wherein the elongate body is formed from a shaft (26), an integrally formed portion (23) which is fitted with the lug (17) being formed on that portion of the said shaft which forms the first sub-section (13), and the pin (15) being formed on that portion of the said shaft which forms the second sub-section (14).

9. Arrangement according to Claim 8, wherein the first sub-section (13) is pivotably mounted in two recesses (24, 25) which are each formed in one of the two opposite housing broad sides (10, 10') of the base device and in each case in a complementary manner in relation to the shaft.

10. Arrangement according to Claim 4, wherein the two rounded projections are offset through 90° in relation to one another.

## Revendications

1. Système constitué d'un appareil de base et d'un élément auxiliaire, qui sont juxtaposées l'un à l'autre respectivement au niveau de l'un de leurs côtés de boîtier (10, 10'), et d'un moyen de liaison (12) servant à la liaison mécanique de l'élément auxiliaire à l'appareil de base, le moyen de liaison (12) étant un corps s'étendant longitudinalement et monté de manière rotative dans l'appareil de base par une première section (13) et dépassant au-delà du côté de boîtier (10) de l'appareil de base par une deuxième section (14) formée sur le moyen de liaison (12), lequel corps peut adopter une position de montage et une position de verrouillage et peut pivoter entre la position de montage et la position de verrouillage, des structures de retenue (15, 16) complémentaires et adaptées spatialement l'une à l'autre étant formées sur la deuxième section (14) du moyen de liaison (12) et sur le côté de boîtier (11) de l'élément auxiliaire, lesquelles structures de retenue sont conçues pour s'interpénétrer dans la position de montage et pour être retenues l'une contre l'autre de manière amovible dans la position de verrouillage, **caractérisé en ce que** des moyens de fixation (17, 18) complémentaires et adaptés spatialement l'un à l'autre sont formés sur la première section (13) du moyen de liaison (12) et sur l'appareil de base, lesquels moyen de fixation bloquent le moyen de liaison (12) dans la position de montage et dans la position de verrouillage en produisant respectivement une force de retenue pouvant être surmontée pour pivoter le moyen de liaison (12).

2. Système selon la revendication 1, dans lequel l'appareil de base est un disjoncteur de protection de circuit et l'élément auxiliaire est un interrupteur auxiliaire.

3. Système selon la revendication 1, dans lequel la structure de retenue sur la deuxième section (14) du moyen de liaison (12) est un tenon (15) faisant saillie radialement à partir de l'axe de pivotement et la structure de retenue, complémentaire à celle-ci, sur le côté de boîtier (11) de l'élément auxiliaire est une ouverture (16) dans le côté de boîtier (11).

4. Système selon la revendication 1, dans lequel le moyen de fixation sur la première section (13) du moyen de liaison (12) est un ergot (17) espacé de l'axe de pivotement dans la direction radiale et doté d'une surface active (19) de courbure concave, et dans lequel le moyen de fixation, complémentaire à celui-ci, sur l'appareil de base est une structure (18) dotée de deux saillies arrondies (20, 21), l'une des saillies arrondies (20, 21) venant respectivement en prise dans la surface active (19) de courbure concave dans la position de montage et dans la position de verrouillage pour produire la force de retenue pouvant être surmontée pour pivoter le moyen de liaison (12).

5. Système selon la revendication 1, dans lequel les moyens de fixation (17, 18) complémentaires et adaptés spatialement l'un à l'autre sont formés de telle sorte que la force de retenue, à surmonter pour pivoter le moyen de liaison (12), dans la position de verrouillage est supérieure à celle dans la position de montage.

6. Système selon la revendication 1, dans lequel la première section (13) du moyen de liaison (12) est réalisée avec un moyen d'actionnement (22) qui est accessible à un outil depuis le côté extérieur de l'appareil de base, pour pouvoir pivoter le moyen de liaison (12).

7. Système selon la revendication 6, dans lequel le moyen d'actionnement est une fente (22) destinée à recevoir l'extrémité libre d'un tournevis.

8. Système selon la revendication 1, dans lequel le corps s'étendant longitudinalement est formé à partir d'un arbre (26) sur la partie formant la première section (13) duquel est formée une partie façonnée (23) supportant l'ergot (17) et sur la partie formant la deuxième section (14) duquel est formé le tenon (15).

9. Système selon la revendication 8, dans lequel la première section (13) est montée de manière pivotante dans deux évidements (24, 25) formés respectivement dans l'un des deux côtés larges de boîtier (10, 10') se faisant face de l'appareil de base et formés respectivement de manière complémentaire à l'arbre.

10. Système selon la revendication 4, dans lequel les deux saillies arrondies sont décalées de 90° l'une par rapport à l'autre.
